# EUROPEAN PATENT APPLICATION

(11) **EP 2 461 580 A1**
(43) Date of publication of application: **06.06.2012**
(21) Application number: 10811184.0
(22) Date of filing: 21.06.2010
(51) Int. Cl.: H04N 7/14, H04N 7/18

(54) **MONITORING MESSAGE TRANSMISSION METHOD AND SYSTEM**

(30) Priority: 26.08.2009 CN 200910091627
(71) Applicant: ZTE Corporation, Shenzhen, Guangdong 518057 (CN)
(72) Inventor: FU, Yonggang, Shenzhen Guangdong 518057 (CN); DUAN, Xinping, Shenzhen Guangdong 518057 (CN)
(74) Representative: Schröer, Gernot H.
(86) International application number: PCT/CN2010/074175
(87) International publication number: WO 2011/023024

(57) **Abstract**

The present invention discloses a method for transmitting monitoring information based on the convergence of the visible communication and the video monitoring, in which a video communication terminal sends a monitoring request to a video surveillance terminal; the video surveillance terminal sends monitoring information to the video communication terminal after receiving the monitoring request; after receiving the monitoring information, the video communication terminal can display the monitoring information locally and can also send the monitoring information to a remote video communication terminal of a visible communication system. The present invention further discloses a system for transmitting monitoring information based on convergence of the visible communication and the video monitoring at the same time. With the method and the system provided in the present invention, the video communication terminal not only has a decoding function so as to perform local display, but also has a coding function so as to send the monitoring information to the remote video communication terminal, which makes the monitoring information to be able to be transmitted in real time via the visible communication system, and displayed in the local video communication terminal or acted as a path input source to be transmitted into the visible communication system, thereby implementing the convergence of the visible communication and the video monitoring.

## Description

### Technical Field

The present invention relates to a communication field, and more especially, to a method and a system for transmitting monitoring information based on the convergence of the visible communication and the video monitoring.

### Background of the Related Art

At present, a great many enterprises and public institutions, especially the large and medium scale enterprises have all established the video monitoring systems, which are mainly used for monitoring a plurality of important areas. Monitoring images collected by each monitoring point in the video monitoring systems can only be displayed on the monitoring terminals and can't be transmitted in real time, which is unable to make users who are not in the local know the monitoring conditions in time, and this is a very large shortcoming for the video monitoring systems.

### Summary of the Invention

In view of this, the main object of the present invention is to provide a method and a system for transferring monitoring information based on the convergence of the visible communication and the video monitoring, thereby making the monitoring information to be transmitted to the video communication terminal in real time.

In order to solve the foregoing technical problem, the technical scheme of the present invention is implemented as follows.

A system for transmitting monitoring information comprises:
a video communication terminal, which is configured to: send a monitoring request to a video surveillance terminal, receive monitoring information sent by the video surveillance terminal, and display the monitoring information locally or send the monitoring information to a remote video communication terminal of a visible communication system, wherein the video communication terminal not only has a decoding function so as to perform local display, but also has a coding function so as to send the monitoring information to the remote video communication terminal; and
a video surveillance terminal, which is configured to: receive the monitoring request of the video communication terminal, and send the monitoring information to the video communication terminal.

The video communication terminal is further configured to: send a multicast message for querying the video surveillance terminal, receive a response message returned by the video surveillance terminal, and save information of the video surveillance terminal;
the video surveillance terminal is further configured to: receive the multicast message sent by the video communication terminal, return the response message to the video communication terminal, wherein the response message includes a parameter which indicates identity of the video surveillance terminal.

The video surveillance terminal is further configured to: initiatively send a multicast message which indicates identity of the video surveillance terminal to the video communication terminal after the video surveillance terminal self starting;
the video communication terminal is further configured to: receive the multicast message sent by the video surveillance terminal, and save information of the video surveillance terminal.

The video communication terminal is further configured to: send an acquisition configuration information request to the video surveillance terminal, and acquire configuration information of the video surveillance terminal through an acquisition configuration information response returned by the video surveillance terminal;
the video surveillance terminal is further configured to: receive the acquisition configuration information request sent by the video communication terminal, and return the acquisition configuration information response to the video communication terminal, wherein the acquisition configuration information response includes the configuration information of the video surveillance terminal.

The video communication terminal is further configured to: modify the configuration information of the video surveillance terminal according to an input of a user after receiving the configuration information, and send a setting configuration information request to the video surveillance terminal, wherein the setting configuration information request includes modified configuration information;
the video surveillance terminal is further configured to: receive the setting configuration information request sent by the video communication terminal, and save the received configuration information and set the configuration information to be valid.

A method for transmitting monitoring information comprises:
a video communication terminal sending a monitoring request to a video surveillance terminal;
the video surveillance terminal sending monitoring information to the video communication terminal after receiving the monitoring request; and
the video communication terminal displaying the received monitoring information and/or sending the monitoring information to a remote video communication terminal of a visible communication system, wherein the video communication terminal not only has a decoding function so as to perform a local display, but also has a coding function so as to send the monitoring information to the remote video communication terminal.

Before sending the monitoring request, the method further comprises: the video communication terminal sending a multicast message for querying the video surveillance terminal;
the video surveillance terminal returning a response message to the video communication terminal after receiving the multicast message, wherein the response message includes a parameter which is used for indicating identity of the video surveillance terminal; and the video communication terminal saving information of the video surveillance terminal after receiving the response message.

Before sending the monitoring request, the method further comprises: the video surveillance terminal initiatively sending a multicast message to the video communication terminal after the video surveillance terminal self starting, wherein the multicast message includes a parameter which is used for indicating identity of the video surveillance terminal; and
the video communication terminal saving information of the video surveillance terminal after receiving the multicast message.

The method further comprises:
the video communication terminal sending an acquisition configuration information request to the video surveillance terminal;
the video surveillance terminal sending an acquisition configuration information response to the video communication terminal after receiving the acquisition configuration information request, wherein the acquisition configuration information response includes configuration information of the video surveillance terminal; and
the video communication terminal displaying the configuration information of the video surveillance terminal included in the acquisition configuration information response after receiving the acquisition configuration information response.

After displaying the configuration information, the method further comprises:
the video communication terminal sending a setting configuration information request to the video surveillance terminal, wherein the setting configuration information request includes modified configuration information; and
the video surveillance terminal saving the received configuration information and setting the configuration information to be valid after receiving the setting configuration information request.

According to the technical scheme provided by the present invention, the video communication terminal can display the monitoring information in the local after receiving the monitoring information, and can also send the monitoring information that is recoded to the remote video communication terminal in the visible communication system, that is, the video communication terminal not only has a decoding function for performing a local display, but also has a coding function for sending to the remote video communication terminal, thereby converging the visible communication and the video monitoring at the same time when keeping the independences of the visible communication system and video monitoring system. The monitoring information is taken as a path of the input source to be transmitted into the visible communication system, which enables the monitoring information to be displayed on the local video communication terminal; or the monitoring information is taken as a path of the input source to be transmitted to the remote video communication terminal through the visible communication system, that is, the monitoring information can be transmitted to other remote video communication terminals which are in the same video conference with this video communication terminal through the local video communication terminal, which enables the monitoring information to be transmitted in real time via the visible communication system, and also enables the users who are not in the local to know the monitoring conditions in time; the present invention expands the use range of the visible communication and video monitoring, and improves the use efficiency of the both greatly.

### Brief Description of Drawings

FIG. 1 is a composition schematic diagram of the system based on the convergence of the visible communication and video monitoring according to the present invention;
FIG. 2 is a flow chart of the video communication terminal automatically discovering the video surveillance terminal according to the present invention;
FIG. 3 is a flow chart of the video communication terminal controlling the video surveillance terminal according to the present invention;
FIG. 4 is a flow chart of the video communication terminal acquiring the media data of the video surveillance terminal according to the present invention.

### Preferred Embodiments of the Present Invention

At present, a great many enterprises and public institutions, especially the large and medium scale enterprises have all established visible communication systems. The visible communication systems include: point-to-point video conference system and multipoint video conference system. If the visible communication system and video monitoring system which are two systems used independently can be converged, the monitoring information can be well transmitted in real time.

Therefore, the basic idea of the present invention is that: a video communication terminal sends a monitoring request to a video surveillance terminal; the video surveillance terminal sends monitoring information to the video communication terminal after receiving the monitoring request. After receiving the monitoring information, the video communication terminal can display it in the local and can also send it to a remote video communication terminal of a visible communication system. The video communication terminal in the present invention not only has a decoding function so as to perform a local display, but also has a coding function so as to send the monitoring information to the remote video communication terminal. The monitoring information is the contents related to the monitoring obtained by the video surveillance terminal, e.g., monitoring images.

Specifically, the video communication terminal starts and searches the video surveillance terminal in the network, and then sends the monitoring request to the video surveillance terminal; the video surveillance terminal returns media description information to the video communication terminal; the video communication terminal sends a media stream request for acquiring the monitoring information and a start play request to the video surveillance terminal; the video surveillance terminal sends media data to the video communication terminal, in which the media data is the monitoring information obtained by the video surveillance terminal through monitoring; the video communication terminal decodes the received media data and then displays the media data in the local, or sends the media data to the remote video communication terminal of the visible communication system.

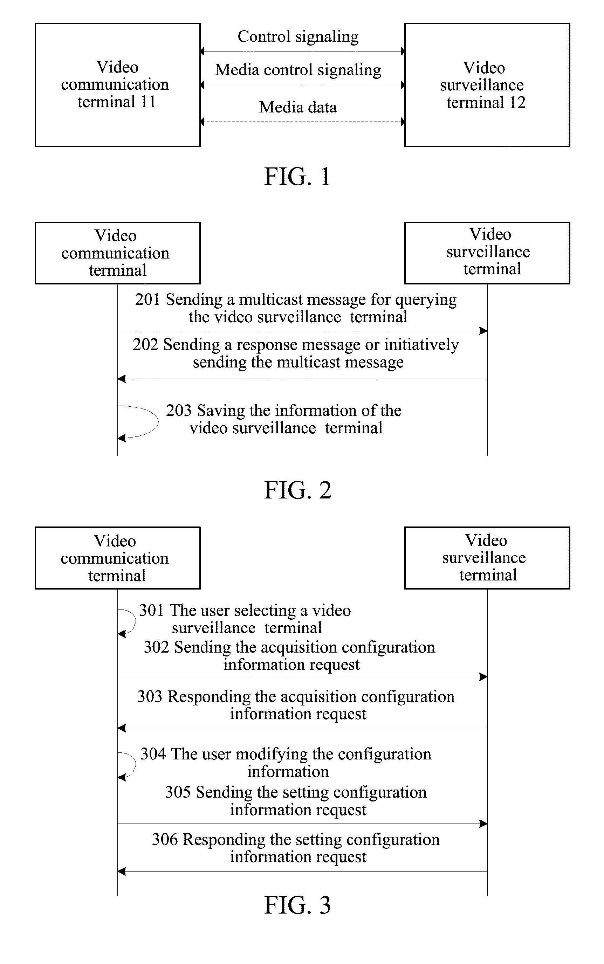

FIG. 1 is the composition schematic diagram of the system based on the convergence of the visible communication and video monitoring according to the present invention, and as shown in FIG. 1, the system of the present invention for implementing the convergence of the visible communication and video monitoring comprises: a video communication terminal 11 and a video surveillance terminal 12; wherein the video communication terminal 11 is configured to: send a monitoring request to the video surveillance terminal 12, receive monitoring information sent by the video surveillance terminal 12, display the monitoring information in the local or send the monitoring information to the remote video communication terminal of the visible communication system; the video communication terminal 11 not only has a decoding function so as to perform a local display, but also has a coding function so as to send the monitoring information to the remote video communication terminal; the video surveillance terminal 12 is configured to: receive the monitoring request of the video communication terminal 11, and send the monitoring information to the video communication terminal 11.

Furthermore, in the process of discovering the video surveillance terminal 12: the video communication terminal 11 is configured to send a multicast message for querying the video surveillance terminal, receive a response message returned by the video surveillance terminal 12, and save the information of the video surveillance terminal 12 so as to subsequently select and control the video surveillance terminal 12; the video surveillance terminal 12 is configured to receive the multicast message sent by the video communication terminal 11, and return a response message to the video communication terminal 11 in an unicast way, wherein the response message includes parameters which indicate the identity of the video surveillance terminal. Or, the video surveillance terminal 12 is configured to initiatively send the multicast message which indicates identity of the video surveillance terminal to the video communication terminal 11 after the video surveillance terminal 12 itself starting; the video communication terminal 11 is configured to receive the multicast message sent by the video surveillance terminal 12, and save the information of the video surveillance terminal 12, so as to subsequently select and control the video surveillance terminal 12.

In the process of the video communication terminal 11 controlling the video surveillance terminal 12: the video communication terminal 11 is configured to send an acquisition configuration information request to the video surveillance terminal 12, and acquire configuration information of the video surveillance terminal 12 through the received acquisition configuration information response returned by the video surveillance terminal 12; the video surveillance terminal 12 is configured to receive the acquisition configuration information request sent by the video communication terminal 11, and return the acquisition configuration information response to the video communication terminal 11, wherein the acquisition configuration information response includes the configuration information of the video surveillance terminal 12. After receiving the configuration information of the video surveillance terminal 12, the video communication terminal 11 can be further configured to modify the configuration information of the video surveillance terminal 12 according to the input of the user, send a setting configuration information request including the modified configuration information to the video surveillance terminal 12, and receive a setting configuration information response returned by the video surveillance terminal 12. Correspondingly, the video surveillance terminal 12 is further configured to receive the setting configuration information request sent by the video communication terminal 11, save the received configuration information and set the configuration information to be valid, and return the setting configuration information response to the video communication terminal 11.

The video communication terminal 11 can be further configured to interact with the video surveillance terminal 12 to obtain a port for receiving the monitoring information.

The video communication terminal 11 has a function of the Session Initiation Protocol (SIP) terminal or a function of the H.323 video conference terminal. The video communication terminal 11 includes both the hardware terminal and the software terminal. The input video source of the video communication terminal 11 can be a camera directly connected with the video communication terminal 11, and also can be a video transmitted from the video surveillance terminal 12 in the network; its implementation can be developed on the existing video communication terminal, or can develop a brand new video communication terminal.

The video communication terminal 11 and the video surveillance terminal 12 mainly have three connection modes: the first one is the connection based on the Local Area Network (LAN) mode, the second one is the connection based on the wireless network; the third mode is the connection based on the serial port such as RS232 and so on.

According to the above description, it can be seen that there are three types of information that needs to be transmitted between the video communication terminal 11 and video surveillance terminal 12 all together.

The first type information is control signaling, e.g., setting configuration information request, which mainly implements to set the video parameters of the video surveillance terminal 12 by the video communication terminal 11 and to control the camera of the video surveillance terminal 12 by the video communication terminal 11, wherein the setting information of video parameters includes parameters of: luminance, chrominance, saturation, contrast, a video format, a video code rate and a video frame rate and so on. The control on the camera includes the setting of rotating the camera to the up or down or left to right, and the setting of the aperture and focal length. The interface of the control signaling can be implemented through making a private protocol interface; and the video communication terminal 11 also can use a way of supporting the browser to directly communicate with the WEBSERVER of the video surveillance terminal 12. The private protocol interface refers to adopting a Transmission Control Protocol (TCP) or a User Datagram Protocol (UDP) to transmit the control signaling, and making the parameter and format of the control signaling as needed. The parameter generally includes the message type and the message body, wherein the message type includes: video parameter setting, coding parameter setting and camera control and so on. The message body refers to the specific contents included in each kind of the message type, such as the message body corresponding to the type of the video parameter setting are luminance, chrominance, saturation and contrast.

The video communication terminal 11 and video surveillance terminal 12 communicate through the private protocol interface, which is mainly for implementing the transmission functions of the control signaling between the both. If the video surveillance terminal 12 supports the WEBSERVER, then communication can be performed between the both through a Hypertext Transfer Protocol (HTTP), and a WEB browser can be embedded in the video communication terminal 11, which is equivalent to the user directly performing control on the video surveillance terminal 12.

The second type information is media control signaling, which is mainly the video communication terminal 11 acquiring the monitoring information (including the video data and audio data) decoded by the video surveillance terminal 12. After acquiring the media data, i.e., the monitoring information, the video communication terminal 11 can display the monitoring information in the local or take the monitoring information as a local video source to transmit to the remote video communication terminal for displaying. The interface of the media control signaling can be implemented through making a private protocol interface; and the video communication terminal 11 also can directly acquire the media data of the video surveillance terminal 12 through the way of Real Time Streaming Protocol (RTSP) on demand. The private protocol interface refers to transmitting the media control signaling through the TCP or UDP, and making the parameter and format of the control signaling as needed, wherein the parameter content includes the media type, the coding parameter, and the address and port for receiving the media data.

The media control signaling of the interaction between the video communication terminal 11 and video surveillance terminal 12 is transmitted through the RTSP or the private protocol interface, which is mainly for the video communication terminal 11 subsequently acquiring the media data of the video surveillance terminal 12. If the RTSP is adopted, the video communication terminal 11 acts as a client of the RTSP, and the video surveillance terminal 12 acts as a server of the RTSP.

The third type information is media data, and the media data transmitted between the video communication terminal 11 and video surveillance terminal 12 are transported through a standard Real-time Transport Protocol (RTP).

With respect to the video communication terminal selecting the video surveillance terminal, there are two kinds of implementation ways: one kind is to directly configure the video surveillance terminal that requires connecting on the video communication terminal, for example, to configure the IP address and port number of the video surveillance terminal; another kind is implemented through making the private protocol interface or through an Universal Plug and Play (UPnP) interface, the video communication terminal acts as a control point device, and the video surveillance terminal acts as a controlled point device, thereby achieving the object of the video communication terminal automatically discovering the video surveillance terminal. The private protocol interface can transmit messages based on the TCP or UDP.

FIG. 2 is the flow chart of the video communication terminal automatically discovering the video surveillance terminal according to the present invention, and the specific steps of the video communication terminal automatically discovering the video surveillance terminal are shown in FIG. 2.

Step 201: the video communication terminal sends the multicast message for querying the video surveillance terminal.

Step 202: the video surveillance terminal adopts the unicast way to return the response message to the video communication terminal after receiving the multicast message sent by the video communication terminal, wherein the response message includes parameters which are used for indicating the identity of the video surveillance terminal.

Step 203: the video communication terminal saves the information of the video surveillance terminal after receiving the response message so as to subsequently perform selection and control.

In addition, the video surveillance terminal also can initiatively send the multicast message to the video communication terminal after the video surveillance terminal itself starting, and the multicast message includes parameters which are used for indicating the identity of the video surveillance terminal; the video communication terminal saves the information of the video surveillance terminal after receiving the multicast message sent by the video surveillance terminal.

If the video communication terminal automatically discovers multiple video surveillance terminals, the video communication terminal can simultaneously save the discovered video surveillance terminals, and the users themselves can configure to select which video surveillance terminal on the video communication terminal.

FIG. 3 is the flow chart of the video communication terminal controlling the video surveillance terminal according to the present invention, and the specific steps are shown in FIG. 3.

Step 301: the user selects a discovered video surveillance terminal on the video communication terminal for controlling.

Step 302: the video communication terminal sends the acquisition configuration information request to the video surveillance terminal so as to acquire the configuration information of the corresponding video surveillance terminal.

Step 303: the video surveillance terminal sends the acquisition configuration information response to the video communication terminal after receiving the acquisition configuration information request, wherein the acquisition configuration information response includes the configuration information of the video surveillance terminal.

Step 304: the video communication terminal displays the configuration information of the video surveillance terminal included in the acquisition configuration information response after receiving the acquisition configuration information response, and the user can perform the modification through the input.

Step 305: the video communication terminal sends the setting configuration information request including modified configuration information to the video surveillance terminal after the user completing the modification to require the video surveillance terminal to modify the configuration information.

Step 306: the video surveillance terminal saves the received configuration information and sets the configuration information to be valid after receiving the setting configuration information request, sends the setting configuration information response to the video communication terminal, and notifies the video communication terminal of the successful configuration.

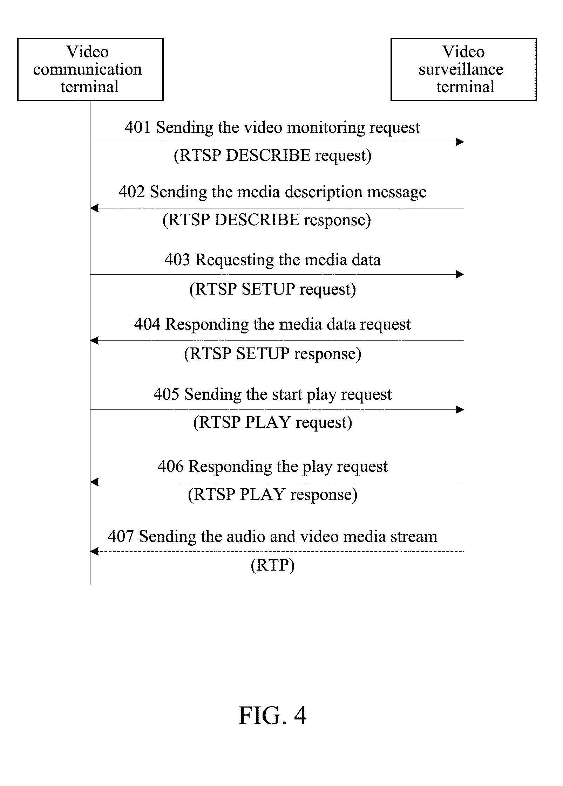

FIG. 4 is the flow chart of the video communication terminal acquiring the media data of the video surveillance terminal according to the present invention, and the specific steps are shown in FIG. 4.

Step 401: the video communication terminal acts as a RTSP client to send the monitoring request, e.g., the RTSP DESCRIBE request, to the video surveillance terminal.

Step 402: the video surveillance terminal sends the media description information to the video communication terminal after receiving the video monitoring request, the media description information can be included in the media monitoring response, e.g., the RTSP DESCRIBE response, and the media description information can be the format and port, etc. of the video data and audio data.

The video corresponds to one port, and the audio corresponds to one port.

Step 403: the video communication terminal sends the acquisition media stream request to the video surveillance terminal after receiving the media description information to require the video surveillance terminal to provide the monitoring information, wherein the acquisition media stream request can be a RTSP SETUP request.

Step 404: the video surveillance terminal sends the acquisition media stream response, e.g., a RTSP SETUP response, to the video communication terminal after receiving the acquisition media stream request.

Step 405: the video communication terminal sends a start play request to the video surveillance terminal after receiving the acquisition media stream response, and the start play request can be a RTSP PLAY request.

Step 406: the video surveillance terminal sends a play request response, e.g., a RTSP PLAY response, to the video communication terminal after receiving the start play request.

Step 407: the video surveillance terminal sends the media stream to the video communication terminal after sending the play request response so as to implement to transmit the monitoring information in real time, wherein the media stream can be sent based on the RTP.

After receiving the media stream sent by the video surveillance terminal, the video communication terminal decodes the media stream and can display the media data in the local; and the video communication terminal can also call the remote video communication terminal through the video and send the received media stream to the remote video communication terminal for displaying. The decoding refers to invoking the decoding library in the video surveillance terminal corresponding to the media data for performing decoding.

Below the method based on the convergence of the visible communication and the video monitoring according to the present invention will be further described in detail with reference to one example.

Step 501: the video communication terminal starts and then finds the video surveillance terminal in the network through an automatic discovery.

The video communication terminal sends a multicast message for querying the video surveillance terminal. The video surveillance terminal uses an unicast way to return a response message to the video communication terminal after receiving the multicast message, wherein the response message includes parameters which are used for indicating the identity of the video surveillance terminal. The video communication terminal receives the response message, and then saves it so as to select and control the video surveillance terminal.

Step 502: the user selects a discovered video surveillance terminal on the video communication terminal to act as a video input source of the video communication terminal.

Step 503: the video communication terminal sends control signaling of the acquisition configuration information request to the video surveillance terminal selected by the user, so as to display the configuration information of the video surveillance terminal, thereby facilitating the user to perform a configuration.

The video communication terminal sends the acquisition configuration information request to the video surveillance terminal. The video surveillance terminal sends the acquisition configuration information response to the video communication terminal after receiving the acquisition configuration information request, wherein the acquisition configuration information response includes the configuration information of the video surveillance terminal. The video communication terminal displays the configuration information of the video surveillance terminal included in the acquisition configuration information response after receiving the acquisition configuration information response, and lets the user perform modification. After the user completes the modification through the input on the video communication terminal, the video communication terminal sends the setting configuration information request to the video surveillance terminal, and the setting configuration information request includes the modified configuration information. After receiving the setting configuration information request, the video surveillance terminal saves the received configuration information and configures the configuration information to be valid, and sends the setting configuration information response to the video communication terminal.

Step 504: the video communication terminal sends a media control signaling for indicating the monitoring request to the video surveillance terminal.

Step 505: the video surveillance terminal sends media description information to the video communication terminal after receiving the media control signaling, and the media description information can be included in a media monitoring response.

Step 506: the video communication terminal interacts with the video surveillance terminal according to the media description information to obtain a port for receiving the media stream after receiving the media description information, and then sends an acquisition media stream request to the video surveillance terminal.

If it is the audio data, the corresponding port is an audio data port, and if it is the video data, the corresponding port is a video data port.

Step 507: the video surveillance terminal sends the media stream to the video communication terminal based on the RTP after receiving the acquisition media stream request.

Step 508: the video communication terminal decodes the media stream after receiving the media stream sent by the video surveillance terminal, and then can display the media stream in the local; furthermore, the video communication terminal can also perform a video call to the remote video communication terminal in the visible communication system, and re-codes the media stream sent by the video surveillance terminal to send to the remote video communication terminal for displaying.

The above media stream includes the audio stream and/or video stream. The above description is just the preferred examples of the present invention, which is not used to limit the protection scope of the present invention.

## Claims

1. A system for transmitting monitoring information, comprising:
a video communication terminal, which is configured to: send a monitoring request to a video surveillance terminal, receive monitoring information sent by the video surveillance terminal, and display the monitoring information locally or send the monitoring information to a remote video communication terminal of a visible communication system, wherein the video communication terminal not only has a decoding function so as to perform local display, but also has a coding function so as to send the monitoring information to the remote video communication terminal; and
a video surveillance terminal, which is configured to: receive the monitoring request of the video communication terminal, and send the monitoring information to the video communication terminal.

2. The system according to claim 1, wherein,
the video communication terminal is further configured to: send a multicast message for querying the video surveillance terminal, receive a response message returned by the video surveillance terminal, and save information of the video surveillance terminal;
the video surveillance terminal is further configured to: receive the multicast message sent by the video communication terminal, return the response message to the video communication terminal, wherein the response message includes a parameter which indicates identity of the video surveillance terminal.

3. The system according to claim 1, wherein,
the video surveillance terminal is further configured to:
initiatively send a multicast message which indicates identity of the video surveillance terminal to the video communication terminal after the video surveillance terminal self starting;
the video communication terminal is further configured to: receive the multicast message sent by the video surveillance terminal, and save information of the video surveillance terminal.

4. The system according to any one of claims 1 to 3, wherein, the video communication terminal is further configured to: send an acquisition configuration information request to the video surveillance terminal, and acquire configuration information of the video surveillance terminal through an acquisition configuration information response returned by the video surveillance terminal;
the video surveillance terminal is further configured to: receive the acquisition configuration information request sent by the video communication terminal, and return the acquisition configuration information response to the video communication terminal, wherein the acquisition configuration information response includes the configuration information of the video surveillance terminal.

5. The system according to claim 4, wherein,
the video communication terminal is further configured to: modify the configuration information of the video surveillance terminal according to an input of a user after receiving the configuration information, and send a setting configuration information request to the video surveillance terminal, wherein the setting configuration information request includes modified configuration information;
the video surveillance terminal is further configured to: receive the setting configuration information request sent by the video communication terminal, and save the received configuration information and set the configuration information to be valid.

6. A method for transmitting monitoring information, comprising:
a video communication terminal sending a monitoring request to a video surveillance terminal;
the video surveillance terminal sending monitoring information to the video communication terminal after receiving the monitoring request; and
the video communication terminal displaying the received monitoring information and/or sending the monitoring information to a remote video communication terminal of a visible communication system, wherein the video communication terminal not only has a decoding function so as to perform a local display, but also has a coding function so as to send the monitoring information to the remote video communication terminal.

7. The method according to claim 6, before sending the monitoring request, further comprising:
the video communication terminal sending a multicast message for querying the video surveillance terminal;
the video surveillance terminal returning a response message to the video communication terminal after receiving the multicast message, wherein the response message includes a parameter which is used for indicating identity of the video surveillance terminal; and
the video communication terminal saving information of the video surveillance terminal after receiving the response message.

8. The method according to claim 6, before sending the monitoring request, further comprising:
the video surveillance terminal initiatively sending a multicast message to the video communication terminal after the video surveillance terminal self starting, wherein the multicast message includes a parameter which is used for indicating identity of the video surveillance terminal; and
the video communication terminal saving information of the video surveillance terminal after receiving the multicast message.

9. The method according to any one of claims 6 to 8, further comprising:
the video communication terminal sending an acquisition configuration information request to the video surveillance terminal;
the video surveillance terminal sending an acquisition configuration information response to the video communication terminal after receiving the acquisition configuration information request, wherein the acquisition configuration information response includes configuration information of the video surveillance terminal; and
the video communication terminal displaying the configuration information of the video surveillance terminal included in the acquisition configuration information response after receiving the acquisition configuration information response.

10. The method according to claim 9, after displaying the configuration information, further comprising:
the video communication terminal sending a setting configuration information request to the video surveillance terminal, wherein the setting configuration information request includes modified configuration information; and
the video surveillance terminal saving the received configuration information and setting the configuration information to be valid after receiving the setting configuration information request.
